(19) Europäisches Patentamt
European Patent Office
Office européen des brevets

(11) **EP 2 070 880 A1**

(12) **EUROPEAN PATENT APPLICATION**

(43) Date of publication:
**17.06.2009 Bulletin 2009/25**

(51) Int Cl.:
***C02F 3/30*** *(2006.01)*

(21) Application number: **08021121.2**

(22) Date of filing: **04.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **04.12.2007 JP 2007313551**

(71) Applicant: **Hitachi Plant Technologies, Ltd.**
**Toshima-ku**
**Tokyo (JP)**

(72) Inventors:
• **Isaka, Kazuichi**
**Tokyo (JP)**

• **Kimura, Yuya**
**Tokyo (JP)**
• **Sumino, Tatsuo**
**Tokyo (JP)**
• **Ikuta, Hajime**
**Tokyo (JP)**

(74) Representative: **Grünecker, Kinkeldey,**
**Stockmair & Schwanhäusser**
**Anwaltssozietät**
**Leopoldstrasse 4**
**80802 München (DE)**

(54) **Treatment facility for wastewater containing ammonium**

(57) The present invention provides a treatment facility and a treatment method for wastewater containing ammonium capable of preventing deactivation of the anaerobic ammonium oxidizing bacteria by high concentration accumulation of nitrite. In the treatment facility (10) for wastewater containing ammonium, a part of the ammonium in the wastewater containing ammonium is oxidized to nitrite in a primary treated water, and the primary treated water is then treated in an anaerobic ammonium oxidizing tank (14) packed with anaerobic ammonium oxidizing bacteria utilizing ammonium and a nitrite as substrates, the treatment facility comprising an inflow line (20) of the primary treated water into the anaerobic ammonium oxidizing tank (14), and a diluting line (26) for mixing diluting water with the primary treated water in the inflow line (20) for dilution depending on a concentration of the nitrite contained in the primary treated water.

FIG.1

**EP 2 070 880 A1**

**Description**

BACKGROUND OF THE INVENTION

Field of the Invention

The present invention relates to a treatment facility for wastewater containing ammonium, particularly to a treatment facility for wastewater containing ammonium, which denitrifies, namely removes the ammonium in the wastewater by an anaerobic ammonium oxidizing reaction using anaerobic ammonium oxidizing bacteria.

Description of the Related Art

Since a nitrogen component contained in sewage or industrial wastewater may cause lake eutrophication or decrease in the dissolved oxygen in rivers, removal of the nitrogen component is necessary. The nitrogen component in the sewage or industrial wastewater is composed mainly of ammonium nitrogen, nitrite nitrogen, nitrate nitrogen and organic nitrogen.

In the past, in case the nitrogen concentration is low, such wastewater has been subjected to removal by an ion exchange method, or oxidization with chlorine or ozone. However, in case the concentration is higher, a biological treatment has been applied and operated in general under the following conditions.

By a biological treatment, nitrification and denitrification treatments by aerobic nitrification and anaerobic denitrification have been conducted. By aerobic nitrification, oxidation of the ammonium nitrogen and the nitrite nitrogen is carried out with ammonium oxidizing bacteria (*e.g. Nitrosomonas, Nitrosococcus, Nitrosospira,* and *Nitrosolobus*) or nitrite oxidizing bacteria (*e.g. Nitrobacter, Nitrospina, Nitrococcus,* and *Nitrospira*). On the other hand by anaerobic denitrification, denitrification by heterotrophic bacteria (*e.g. Pseudomonas denitrificans*) are carried out.

A nitrification tank for the aerobic nitrification is run with a load in the range of 0.2 to 0.3 kg-N/m$^3$/day, and a denitrification tank for the anaerobic denitrification is run with a load in the range of 0.2 to 0.4 kg-N/m$^3$/day. To treat a sewage water with the total nitrogen concentration of 30 to 40 mg/L, the retention time of 6 to 8 hours for the nitrification tank and 5 to 8 hours for the denitrification tank are required, and large scale tanks are required. Furthermore, for industrial wastewater containing only inorganics, although the nitrification tank and the denitrification tank are designed for the similar loads, organics are necessary for denitrification and conventionally methanol is added to a concentration 3 to 4-fold the nitrogen concentration. Consequently there has been a problem of a high initial cost as well as an enormous running cost.

As a method to solve the problem, a nitrogen removal method by an anaerobic ammonium oxidizing method has been disclosed in Japanese Patent Application Laid-Open No. 2001-37467. According to the anaerobic ammonium oxidizing method, ammonium acts as a hydrogen donor and a nitrite acts as a hydrogen acceptor and the ammonium and the nitrite are simultaneously denitrified in accordance with the following reaction formula by anaerobic ammonium oxidizing bacteria.

$$1.00\ NH_4 + 1.32\ NO_2 + 0.066\ HCO_3 + 0.13\ H^+ \rightarrow 1.02\ N_2 + 0.26\ NO_3 + 0.066$$
$$CH_2O_{0.5}N_{0.15} + 2.03\ H_2O \qquad \text{(Formula 1)}$$

Since ammonium is used as a hydrogen donor according to the method, the consumption of organics (*e.g.* methanol) for denitrification can be reduced substantially and production of sludge can be reduced, the method will be used for nitrogen removal in the future as one of the advantageous methods.

SUMMARY OF THE INVENTION

For treating wastewater containing ammonium, about a half of ammonium is oxidized to nitrite in a nitrification step. It is necessary as shown in Formula 1 to adjust the ratio of ammonium nitrogen to nitrite nitrogen to 1 : 1.32. In case the ammonium concentration is so high as about 1,000 mgN/L as in the case of fermentation wastewater, and the ammonium is oxidized to the concentration ratio of the ammonium to the nitrite suitable for anaerobic ammonium oxidization, the ammonium concentration becomes 431 mgN/L and the nitrite concentration becomes 569 mg/L. In other words, the nitrite concentration of the inflow water to the anaerobic ammonium oxidizing tank is as high as 569 mg/L. This has raised a problem that during a process trouble or a process start-up, the treatment may become incomplete and high concentration nitrite may accumulate to deactivate the anaerobic ammonium oxidizing bacteria.

The present invention has been made under such circumstances, whose object is to provide a treatment facility and a treatment method for wastewater containing ammonium, which can avoid deactivation of the anaerobic ammonium oxidizing bacteria by high concentration accumulation of nitrite.

To attain the object, a first aspect of the present invention provides a treatment facility for wastewater containing ammonium, in which a part of the ammonium in the wastewater containing ammonium is oxidized to nitrite in a primary treated water, and the primary treated water is then treated in an anaerobic ammonium oxidizing tank packed with anaerobic ammonium oxidizing bacteria utilizing ammonium and a nitrite as substrates, the treatment facility comprising: an inflow line of the primary treated water into the anaerobic ammonium oxidizing tank; and a diluting line for mixing diluting water with the primary treated water in the inflow line for dilution depending on a concentration of the nitrite contained in the primary treated water.

According to the treatment facility for wastewater containing ammonium of the present invention, the primary treated water, which has been subjected to a nitrification treatment by nitrification bacteria to oxidize a part of the ammonium of the wastewater containing ammonium to nitrite, is subjected to a denitrification treatment for denitrification by anaerobic ammonium oxidizing bacteria in an anaerobic ammonium oxidizing tank to a secondary treated water. Thereby a diluting line is provided so that diluting water is mixed into an inflow line of the primary treated water connected to the anaerobic ammonium oxidizing tank, and the primary treated water is diluted depending on the concentration of the nitrite therein.

By providing the diluting line to add the diluting water to the primary treated water, the accumulation of a high concentration nitrite in the anaerobic ammonium oxidizing tank leading to deactivation of the anaerobic ammonium oxidizing bacteria can be prevented.

To prepare the primary treated wastewater containing ammonium and a nitrite, one of a method to convert a part of ammonium in the wastewater containing ammonium to a nitrite by regulating the nitrification conditions of a nitrite-type nitrification packed with ammonium oxidizing bacteria, and a method to allocate by a distributor the wastewater containing ammonium to the nitrification tank and an anaerobic ammonium oxidizing tank, thereby the ammonium in the wastewater containing ammonium allocated to the nitrification tank is completely converted to nitrite, can be applied.

As the diluting water of the present invention the secondary treated water or industrial water can be used. In case the DO (dissolved oxygen) concentration in the diluting water is high, a deaeration treatment with a nitrogen gas, *etc.* may be carried out.

A second aspect of the present invention is characterized in that the diluting water according to the first aspect is supplied from a settling pond of a sewage treatment plant.

Due to intensive studies the present inventors have found that the following features should preferably be taken into consideration with respect to the diluting water. A wastewater to be used for the diluting water should preferably have a low DO, because anaerobic ammonium oxidizing bacteria are not resistant to existence of oxygen. Since the anaerobic ammonium oxidizing bacteria are not resistant to existence of oxygen, a lower BOD (biochemical oxygen demand) is preferable for the diluting water. In case a large amount of SS (suspended solids) flow in, they may accumulate in the anaerobic ammonium oxidizing tank or make a BOD component dissolve out of the sludge, to deactivate eventually the anaerobic ammonium oxidizing bacteria. Consequently, the diluting water has preferably a low DO, a low SS and a low BOD.

According to the second aspect, a suitable diluting water type is qualified. A wastewater supplied from a final settling pond of a sewage treatment plant is preferable as the diluting water.

A third aspect of the present invention is characterized in that the facility further comprises at least one of a deaeration tank in which dissolved oxygen (DO) in the mixed water of the primary treated water and the diluting water according to the first aspect is deaerated, and a solid-liquid separation device by which the BOD and SS in the mixed water are removed.

According to the third aspect, a deaeration tank for reducing the DO in the mixed water of the primary treated water and the diluting water and/or a solid-liquid separation device for removing the BOD and SS is installed. Since it is conceivable that occasionally the mixed water may contain a high DO, and the diluting water may contain a high DO, BOD or SS, it is preferable to install the deaeration tank for consuming the DO and/or the solid-liquid separation device for removing the BOD and SS. In this regard, the DO is reduced in the deaeration tank by nitrification bacteria in the treated water for nitrification and/or common bacteria contained in the diluting water.

As described above, according to the treatment facility for wastewater containing ammonium of the present invention, deactivation of anaerobic ammonium oxidizing bacteria due to accumulation to a high concentration of a nitrite can be prevented, so that a stable treatment of the wastewater containing ammonium is possible.

BRIEF DESCRIPTION OF THE DRAWINGS

Fig. 1 is a schematic flow diagram showing the outlined constitution of a treatment facility for wastewater containing ammonium according to the present invention;

Fig. 2 is a schematic flow diagram showing the outlined constitution of the second embodiment of a treatment facility for wastewater containing ammonium according to the present invention;

Fig. 3 is a schematic flow diagram showing the outlined constitution of the third embodiment of a treatment facility for wastewater containing ammonium according to the present invention; and

Fig. 4 is a schematic flow diagram showing the outlined constitution of the fourth embodiment of a treatment facility for wastewater containing ammonium according to the present invention.

DETAILED DESCRIPTION OF THE PREFERRED EMBODIMENTS

To prepare the primary treated wastewater containing ammonium and a nitrite, one of a method to convert a part of ammonium in the wastewater containing ammonium to a nitrite by regulating the nitrification conditions of a nitrification tank packed with ammonium oxidizing bacteria, and a method to allocate by a distributor the wastewater containing ammonium to the nitrification tank and an anaerobic ammonium oxidizing tank, thereby the ammonium in the wastewater containing ammonium allocated to the nitrification tank is completely converted to nitrite, can be applied in the present invention.

Although the present embodiment described hereinbelow is based on the method to prepare the primary treated wastewater containing ammonium and a nitrite by regulating the nitrification conditions of a nitrification tank packed with ammonium oxidizing bacteria to convert a part of ammonium in the wastewater containing ammonium to a nitrite, the same is also applicable to the method to allocate the wastewater containing ammonium by a distributor to the nitrification tank and an anaerobic ammonium oxidizing tank, and to convert the ammonium in the wastewater containing ammonium allocated to the nitrification tank completely to a nitrite.

The treatment facility for wastewater containing ammonium of the present invention will be described in more detail by means of the accompanied drawings.

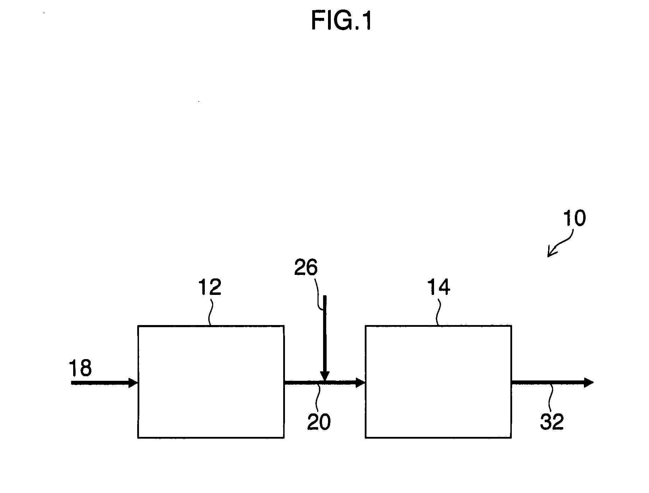

As shown in Fig. 1, the treatment facility 10 for wastewater containing ammonium (hereinafter referred to also simply as "the wastewater ") includes a nitrification tank 12 to nitrite a part of the ammonium in the wastewater, an anaerobic ammonium oxidizing tank 14 to remove the ammonium and the nitrite in the effluent wastewater from the nitrification tank 12 by anaerobic ammonium oxidizing bacteria, and a diluting line 26.

There is no particular restriction on the wastewater containing ammonium, and a sludge filtrate discharged from a solid-liquid separation of nitrited sludge of sewage sludge at a sewage treatment plant, and an ammonia scrubber wastewater discharged by a scrubbing treatment of an ammoniac odor can be exemplified. Further examples include wastewater from a semiconductor plant, wastewater from metal refinery and leached water from garbage.

The nitrite-type nitrification 12 (herein referred to also simply as the "nitrification tank 12") is connected with an inflow line 18, through which the wastewater containing ammonium flows in.

In the nitrite-type nitrification 12 ammonium oxidizing bacteria which oxidize ammonium to a nitrite are retained, and an aeration pipe for aerating a pressurized air sent from a blower is equipped at the tank bottom. According to the above, substantially all almost the ammonium contained in the wastewater containing ammonium allocated to the nitrite-type nitrification can be oxidized to a nitrite by ammonium oxidizing bacteria.

As a retaining method for ammonium oxidizing bacteria in the nitrite-type nitrification, appropriate use of a pellet or a fixed bed may be exemplified. Example of a material for the pellet include, but not limited to, gels, such as polyvinyl alcohol, alginic acid and polyethylene glycol, cellulose, and plastics, such as polyester, polypropylene and polyvinyl chloride. Furthermore, one of a method for entrapping the ammonium oxidizing bacteria inside the pellet, and a method for immobilizing the same by adhesion to the pellet surface may be used. For example, a pellet entrapping the ammonium oxidizing bacteria can be prepared by first entrapping complex microorganism sludge containing ammonium oxidizing bacteria, nitrite oxidizing bacteria, *etc.* and by heat-treating the pellet to deactivate the nitrite oxidizing bacteria in the complex microorganism sludge. In such case, the heat-treatment temperature is preferably in the range of 50 to 90°C, and more preferably in the range of 60 to 80°C. The pellet should be preferably shaped to a spherical, cylindrical, porous, cubic, spongy or honeycomb form. Since the fixed-bed method will be described hereinbelow in detail with respect to a retaining method for anaerobic ammonium oxidizing bacteria in an anaerobic ammonium oxidizing tank, an additional description here is withheld.

As shown in Fig. 1, an anaerobic ammonium oxidizing tank 14 is installed downstream of the nitrification tank 12 connected together by an inflow line 20.

In the anaerobic ammonium oxidizing tank 14 are retained anaerobic ammonium oxidizing bacteria, which denitrify ammonium and a nitrite simultaneously according to the following reaction formula utilizing ammonium as a hydrogen donor and a nitrite as a hydrogen acceptor.

$$1.00\ NH_4 + 1.32\ NO_2 + 0.066\ HCO_3 + 0.13\ H^+ \rightarrow 1.02\ N_2 + 0.26\ NO_3 + 0.066$$

$$CH_2O_{0.5}N_{0.15} + 2.03\ H_2O \quad \text{(Formula 1)}$$

As shown in Formula 1 by an anaerobic ammonium oxidizing method the reaction proceeds at the ratio of ammonium nitrogen to nitrite nitrogen of 1 : 1.32. Consequently, assuming the nitrification rate in the nitrite-type nitrification 12 be 100%, about 57% of the ammonium in the raw wastewater should be oxidized to nitrite and the balance of 43% of the ammonium should remain intact, so that the ratio of ammonium nitrogen to nitrite nitrogen in the inflow water to the anaerobic ammonium oxidizing tank can be adjusted to 1 : 1.32.

The anaerobic ammonium oxidizing bacteria are retained in the anaerobic ammonium oxidizing tank 14, and a retaining method with a pellet or a fixed bed can be favorably utilized similarly to the retaining method for ammonium oxidizing bacteria in the nitrite-type nitrification. Since the method using a pellet is described hereinabove, a duplication is withheld here and the method using a fixed bed will be described below. Examples for a material for the fixed bed include, but not limited to, plastic materials, such as polyethylene, polyester, polypropylene and polyvinyl chloride, and an active carbon fiber. The fixed bed may be shaped to a fibrous, rosette or honeycomb form but not limited thereto. An apparent volume of the fixed bed packed in the anaerobic ammonium oxidizing tank is in the range of 30 to 80% of the tank, and preferably in the range of 40 to 80%. The favorable porosity for use is 80% or higher. In addition to the pellet and the fixed bed, granules formed by self-pelleting of microorganisms may be used for the present invention.

The ammonium in the wastewater containing ammonium is denitrified in the nitrification tank 12 and the anaerobic ammonium oxidizing tank 14, the secondary treated water is discharged through the effluent line 32. For treating wastewater containing ammonium in such a manner, about a half of ammonium is oxidized to nitrite in the nitrification step. It is necessary as shown in the Formula 1 to adjust the ratio of ammonium nitrogen to nitrite nitrogen to 1 : 1.32. In case the ammonium concentration is so high as about 1,000 mgN/L as in the case of fermentation wastewater, and the ammonium is oxidized to the concentration ratio of the ammonium to the nitrite suitable for anaerobic ammonium oxidization, the ammonium concentration becomes 431 mgN/L and the nitrite concentration becomes 569 mg/L. In other words, the nitrite concentration of the inflow water to the anaerobic ammonium oxidizing tank is as high as 569 mg/L. Therefore during a process trouble or a process start-up, the treatment may become incomplete and high concentration nitrite may accumulate to deactivate the anaerobic ammonium oxidizing bacteria.

Consequently, according to the present invention as shown in Fig. 1, the diluting line 26 is connected to the inflow line 20, so that the diluting water can be mixed with the wastewater containing ammonium as well as the nitrite generated in the nitrification tank 12 depending on the nitrogen concentration thereof.

By connecting the diluting line 26 that adds the diluting water to the wastewater containing ammonium as well as the nitrite generated in the nitrification tank, the accumulation of the nitrite to a high concentration leading to deactivation of the anaerobic ammonium oxidizing bacteria can be avoided. As the diluting water of the present invention, the secondary treated water or industrial water can be used.

Consequently, the present invention is effective in the following cases.

(1) In case the nitrite concentration in the tank increases due to any cause (*e.g.* water temperature decrease, presence of an inhibiting substance in wastewater, increase of the nitrite concentration of the raw water, sharp increase of the load):

In such case, the diluting line is activated, so that decrease in the activity of the anaerobic ammonium oxidizing bacteria by increase of the nitrite concentration in the anaerobic ammonium oxidizing tank can be prevented.

(2) In case a low concentration of the nitrite in the inflow water is desirable:

At the startup of the facility or a resumption of the operation of the facility, the activity in the tank is not high enough. Should a high concentration wastewater be fed to the tank under such condition, the activity of the anaerobic ammonium oxidizing bacteria would be further lowered.
The activity decrease of the anaerobic ammonium oxidizing bacteria can be prevented, if the nitrite concentration is lowered and then the diluted water is fed to the tank.

Wastewater to be used for the diluting water according to the present invention should preferably have a low DO, because anaerobic ammonium oxidizing bacteria are not resistant to existence of oxygen. Since the anaerobic ammonium oxidizing bacteria are not resistant to existence of oxygen, a lower BOD (biochemical oxygen demand) is preferable for the diluting water. In case a large amount of SS (suspended solids) flow in, they may accumulate in an anaerobic ammonium oxidizing tank or make a BOD component dissolve out of the sludge, to deactivate eventually the anaerobic ammonium oxidizing bacteria. Consequently, the diluting water has preferably a low DO, low SS and low BOD.

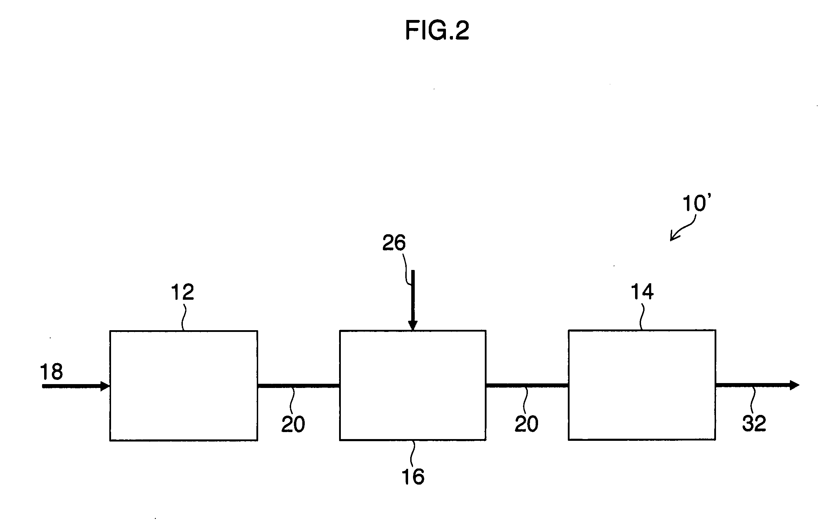

Therefore, in case the DO (dissolved oxygen) concentration of the diluting water is high, the water is preferably deaerated with a nitrogen gas, *etc.* before use. Namely, in the treatment facility for wastewater containing ammonium of the present invention, a deaeration tank 16 should be preferably installed as shown in Fig. 2 in order to deaerate the diluted wastewater that is a mixture of the wastewater containing ammonium as well as the nitrite generated in the nitrification tank 12 and the diluting water. Therewith the DO of the diluted wastewater of the wastewater containing ammonium as well as the nitrite and the diluting water can be lowered, because the effluent water from the nitrification tank 12 contains high DO, and the diluting water may contain a high DO in some cases. In the deaeration tank 16, the DO is reduced by nitrification bacteria in the treated water for nitrification and/or common bacteria contained in the diluting water.

Although not illustrated in the Drawings, it is preferable to install a solid-liquid separation device to remove BOD and SS in addition to the deaeration tank for deaeration. Since it is conceivable that the diluting water may contain in some cases in addition to DO, also BOD and SS, it is preferable to install a solid-liquid separation device to remove the BOD and SS. Examples of a solid-liquid separation device include a centrifuge, a filter and a solid-liquid separation tank.

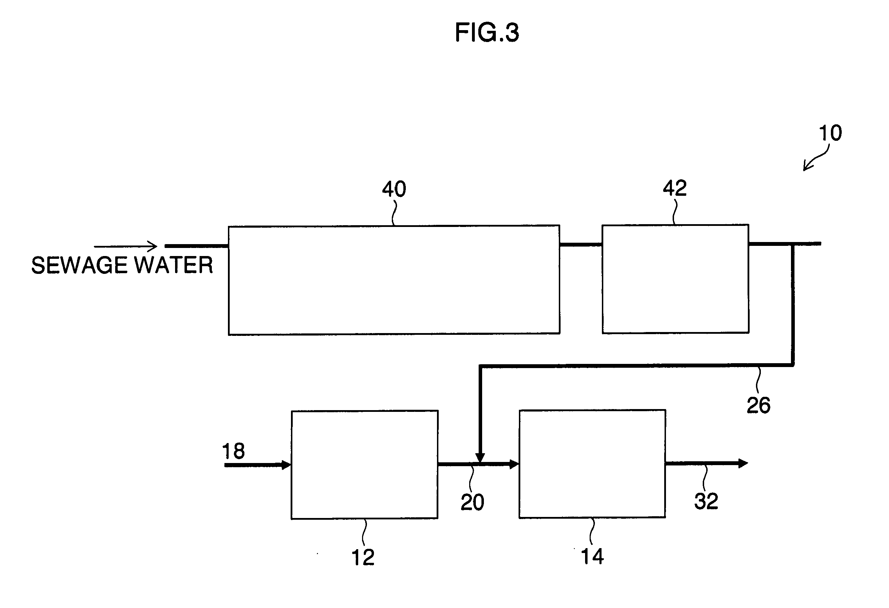

Fig. 3 shows a sewage treatment facility, in which the treated sewage water can be used as the diluting water for the anaerobic ammonium oxidizing tank. The sewage water treated in a biological treatment tank 40 is transferred to a settling tank 42, and the supernatant water (treated water) of the settling tank 42 is flown into the diluting line 26 as the diluting water. According to the above, the treated water can be utilized arbitrarily depending on a required dilution rate. With the treated sewage water the deaeration treatment is not required, which is therefore advantageous.

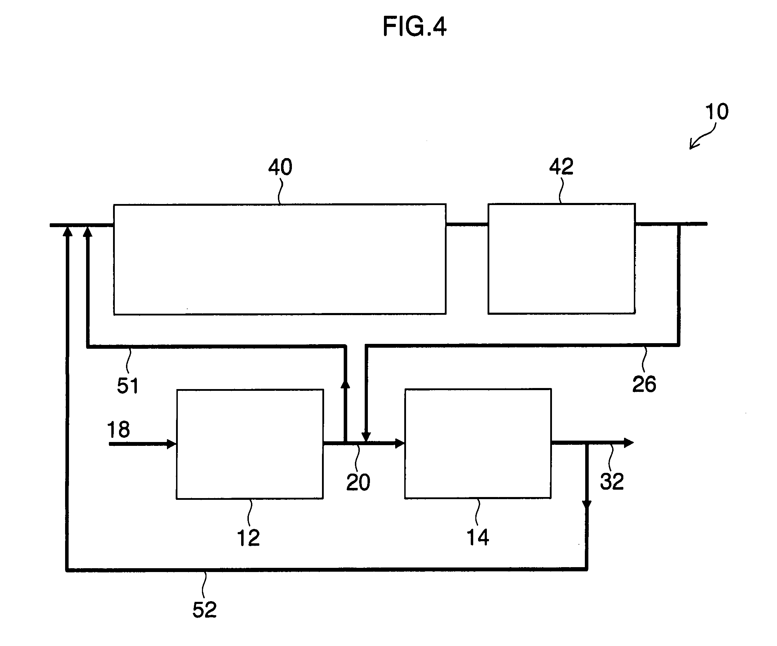

In Fig. 4 are added to the process shown in Fig. 3 a recycle line 51 that sends back the excess water generated by dilution of the nitrite-type nitrification treated water to the biological treatment tank 40, and a recycle line 52 that sends back the treated water of the anaerobic ammonium oxidizing tank 14 to the biological treatment tank 40, if sufficient water quality is not obtained, or if nitric acid generated by the anaerobic ammonium oxidizing reaction need be further treated.

Although a sewage treatment facility is exemplified above for the treatment facility for wastewater containing ammonium with a biological treatment tank 40, and a settling tank 42 shown in Figs. 3 and 4, a wastewater treatment process such as a semiconductor plant wastewater treatment process having similar functions to the sewage treatment facility may be selected, without limitation to the sewage treatment facility.

As described above, deactivation of the anaerobic ammonium oxidizing bacteria can be prevented according to the present invention, coping with a possible trouble in which a treatment does not function sufficiently and a nitrite may accumulate to a high concentration.

(Example)

The present invention will now be described by way of an example thereof, provided that the present invention is not limited thereto.

A wastewater treatment test was conducted with a synthetic wastewater containing mainly ammonia, which concentration was 1,000 mgN/L. A sewage sludge was entrapped in a pellet of a polyethylene glycol gel, with which the nitrification treatment was conducted. The nitrification treatment test was carried out in a 20-L reactor at the water temperature of 30°C. The HRT (hydraulic retention time) was 8 hours, and pH was adjusted to 7.5 by sodium bicarbonate. The resulting average ammonia concentration of the treated water was 400 mg/L and the same for nitrite was 550 mg/L. The treated water was used for starting up an anaerobic ammonium oxidizing tank.

(Comparative Example)

(Test 1)

A test was planned with a start-up of the anaerobic ammonium oxidizing tank using the nitrification treated water without dilution, and with operation conditions for the anaerobic ammonium oxidizing tank of: the retention time of 2 days, the water temperature of 30°C and the pH of 7.6. For the test a 4-L reactor was used, in which 0.8 L of a pellet of a polyethylene glycol gel entrapping an enriched sludge of anaerobic ammonium oxidizing bacteria was packed. The immobilized anaerobic ammonium oxidizing bacteria were obtained through an enrichment culture of a sewage sludge and the sludge content in the pellet was 1.0% (ref. Japanese Patent Application Laid-Open No. 2005-342705). As a result, the nitrite concentration in the reactor was 450 mg/L according to sampling on day 4 after the operation start showing the increase in the nitrite concentration in the reactor. Although, after changing the retention time to 7 days the operation was continued for about 3 months, the denitrification activity could not reach 0.5 kg-N/m$^3$/day or higher.

(Example)

(Test 1)

A start-up test of the treatment apparatus 10 for wastewater containing ammonium shown in Fig. 1 was conducted with the nitrified water of the Comparative Example. In the test a tap water deaerated by a nitrogen gas was used as the diluting water. One (1) part of the nitrified water was diluted with 9 parts of the diluting water (10-fold dilution). The dilution rate was gradually decreased with increase of the activity. When diluted, all the nitrified water could not be sent to the anaerobic ammonium oxidizing tank, and a part of the same was treated by another apparatus. The operation conditions of the anaerobic ammonium oxidizing tank were: the retention time of 2 days, the water temperature of 30°C and the pH of 7.6. For the test a 4-L reactor was used, in which 0.8 L of a pellet of a polyethylene glycol gel entrapping an enriched sludge of anaerobic ammonium oxidizing bacteria was packed as in the Comparative Example. The immobilized anaerobic ammonium oxidizing bacteria were obtained through an enrichment culture of a sewage sludge and the sludge content in the pellet was 1.0%.

As a result, for about 1 week the removal rate of the nitrite content was 50% or less and thereafter the removal rate increased gradually. By decreasing gradually the dilution rate, after 1 month an operation without the dilution was possible. By decreasing the retention time, the activity of 3.0 kg-N/m$^3$/day could be attained after about 2 months.

As demonstrated above, it is difficult to send a wastewater containing a high concentration nitrite immediately after the start-up of the operation, and is helpful to use a diluting water.

(Test 2)

As the diluting water, an untreated sewage water (1), an effluent wastewater (2) from the denitrification tank, and a treated sewage water (3) were used for tests respectively. The reactors, the pellets, and the operation conditions used for the test were identical with the Example (Test 1). The respective diluting water samples did not substantially contain DO, and a deaeration treatment was not necessary as in the case of the tap water.

In case an untreated sewage water (1) was used, removal of the nitrite could be confirmed, but removal of the ammonium could not be confirmed. In other words, instead of the anaerobic ammonium oxidizing reaction, an ordinary denitrification reaction occurred. This inclination did not change through an about 2-month operation, and the start-up of the anaerobic ammonium oxidizing tank was unsuccessful.

In case an effluent wastewater (2) from the denitrification tank was used, through an about 2-month operation, the start-up of the anaerobic ammonium oxidizing tank was unsuccessful. The effluent wastewater contained 2,000 mg/L of SS, which indicated that putrefaction of the sludge disturbed the start-up.

In case a treated sewage water (3) was used, the same results as with the tap water could be obtained. Since the deaeration treatment is not necessary with the use of the treated sewage water, it is believed to be advantageous to use the same. For realization of the above, the treatment facilities for wastewater containing ammonium shown in Fig. 3 or 4 are considered to be applicable.

**Claims**

1. A treatment facility (10) for wastewater containing ammonium, in which a part of the ammonium in the wastewater containing ammonium is oxidized to nitrite in a primary treated water, and the primary treated water is then treated in an anaerobic ammonium oxidizing tank packed (14) with anaerobic ammonium oxidizing bacteria utilizing ammonium and a nitrite as substrates, the treatment facility comprising:

   an inflow line (20) of the primary treated water into the anaerobic ammonium oxidizing tank (14); and
   a diluting line (26) for mixing diluting water with the primary treated water in the inflow line (20) for dilution depending on a concentration of the nitrite contained in the primary treated water.

2. The treatment facility (10) for wastewater containing ammonium according to claim 1, wherein the diluting water is supplied from a settling pond of a sewage treatment plant.

3. The treatment facility (10) for wastewater containing ammonium according to claim 1, further comprising at least either of a deaeration tank (16) in which dissolved oxygen (DO) in the mixed water of the primary treated water and the diluting water is deaerated, or a solid-liquid separation device by which BOD and SS in the mixed water are removed.

FIG.1

FIG.2

EP 2 070 880 A1

# FIG.3

SEWAGE WATER →

FIG.4

EP 2 070 880 A1

Europäisches
Patentamt

European
Patent Office

Office européen
des brevets

# EUROPEAN SEARCH REPORT

Application Number

EP 08 02 1121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 580 169 A (HITACHI PLANT ENG & CONSTR CO [JP] HITACHI PLANT TECHNOLOGIES LTD [JP]) 28 September 2005 (2005-09-28) * figure 1 * * paragraphs [0027], [0028], [0030], [0034], [0041] * | 1 | INV. C02F3/30 |
| Y | | 3 | |
| X | JP 2006 239572 A (HITACHI PLANT TECHNOLOGIES LTD) 14 September 2006 (2006-09-14) * abstract; figure 1 * | 1 | |
| X | JP 2003 047990 A (KURITA WATER IND LTD) 18 February 2003 (2003-02-18) * abstract; figure 1 * | 1 | |
| Y | JP 06 142685 A (KURITA WATER IND LTD) 24 May 1994 (1994-05-24) * abstract; figure 1 * | 3 | |

TECHNICAL FIELDS
SEARCHED (IPC)

C02F

The present search report has been drawn up for all claims

| Place of search | Date of completion of the search | Examiner |
|---|---|---|
| Munich | 20 February 2009 | Galiana López, Paula |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 08 02 1121

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2009

| Patent document cited in search report | | Publication date | Patent family member(s) | | Publication date |
|---|---|---|---|---|---|
| EP 1580169 | A | 28-09-2005 | CN | 1673121 A | 28-09-2005 |
| | | | JP | 2005305410 A | 04-11-2005 |
| | | | KR | 20060043557 A | 15-05-2006 |
| | | | US | 2005211629 A1 | 29-09-2005 |
| | | | US | 2006196815 A1 | 07-09-2006 |
| JP 2006239572 | A | 14-09-2006 | NONE | | |
| JP 2003047990 | A | 18-02-2003 | NONE | | |
| JP 6142685 | A | 24-05-1994 | JP | 3198674 B2 | 13-08-2001 |

EPO FORM P0459

For more details about this annex : see Official Journal of the European Patent Office, No. 12/82

## REFERENCES CITED IN THE DESCRIPTION

**Patent documents cited in the description**

- JP 2001037467 A
- JP 2005342705 A